# EUROPÄISCHE PATENTSCHRIFT

(11) **EP 0 713 228 B1**
(45) Veröffentlichungstag und Bekanntmachung des Hinweises auf die Patenterteilung: **26.08.1998**
(21) Anmeldenummer: 95810681.7
(22) Anmeldetag: 31.10.1995
(51) Int. Cl.: H01C 7/02, H01C 1/08, H01C 1/082, H02H 9/02, H01H 33/16

(54) **Vorrichtung zur Strombegrenzung**
Current limiting device
Dispositif pour la limitation de courant

(30) Priorität: 19.11.1994 DE 4441279
(43) Veröffentlichungstag der Anmeldung: 22.05.1996
(73) Patentinhaber: ASEA BROWN BOVERI AG, 5400 Baden (CH)
(72) Erfinder: Baiatu, Tudor, Dr., CH-5200 Brugg (CH)

(56) Entgegenhaltungen:
- DE-U- 9 100 865
- FR-A- 2 206 610
- FR-A- 2 348 614
- FR-A- 2 606 929
- GB-A- 294 549
- US-A- 3 996 447
- US-A- 5 296 996

## Beschreibung

### TECHNISCHES GEBIET

Bei der Erfindung wird ausgegangen von einem reversiblen Überstrombegrenzer nach dem Oberbegriff der Patentansprüche 1 und 2.

### STAND DER TECHNIK

Mit dem Oberbegriff der Patentansprüche 1 und 2 nimmt die Erfindung auf einen Stand der Technik Bezug, wie er aus der US-A-5,296,996 bekannt ist. Dort ist eine für Niederspannungsanwendungen geeignete Kurzschluß-Schutzschaltung angegeben, bei der zu einem mechanischen Schalter und einer Anregungsspule, welche diesen Schalter steuert, ferner ein 1. Kaltleiter auf Polymerbasis und ein 2. keramischer Kaltleiter in Reihe geschaltet sind. In einer 1. Parallelschaltung zur Reihenschaltung von Anregungsspule und den beiden Kaltleitern kann eine hochohmige Spule mit einem Widerstand in Reihe geschaltet sein, wobei dieser Widerstand ein Kaltleiter oder ein Varistor oder ein ohmscher Widerstand sein kann; eine 2. Parallelschaltung kann einen Varistor aufweisen.

Aus der FR-A-2606929 ist eine Überstrom-Schutzschaltung bekannt, bei der zu einem mechanischen Schalter und einer Anregungsspule, welche diesen Schalter steuert, ferner ein Polymer-Kaltleiter in Reihe geschaltet ist. Parallel zu diesem Kaltleiter kann ein Spannungsbegrenzer aus ZnO geschaltet sein, der aus 2 Elementen besteht, welche unterschiedlich starke Stromanstiege bei einem Spannungsanstieg bewirken.

Bei Schutzschaltungen, insbesondere für steuerbare Hochleistungshalbleiter, wie sie in Stromrichtern für die Traktion und für Stromübertragungen verwendet werden, sind zusätzliche Induktivitäten im Hauptstromkreis unerwünscht.

Aus der US-A-4,583,146 ist es bekannt, zur Gewährleistung eines lichtbogenarmen Löschens in Parallelzweigen zu einem mechanischen Unterbrecherkontakt einen Kaltleiter und einen Varistor vorzusehen. Der Kaltleiter kann endseitig eine dünne Varistorschicht aufweisen. Beim Öffnen des mechanischen Schalters kommutiert der Strom von diesem auf den Kaltleiter und Varistor.

In Schaltungen ohne Unterbrecherkontakt ist das dynamische Ansprechverhalten einer derartigen Strombegrenzerschaltung unbefriedigend.

Aus der CH-A-581 377 ist es bekannt, einen Kaltleiter zu einem Festwiderstand und zu einem thermisch oder magnetisch auslösbaren 1. Schalter parallelzuschalten, wobei in Reihe zu dieser Parallelschaltung ein spannungaufbauender 2. Schalter vorgesehen ist. Dabei wird der Kaltleiter erst im Kurzschlußfall belastet, erhöht dabei seinen Widerstand und ermöglicht ein weitgehend lastfreies Schalten des 2. Schalters. Anstelle eines Kaltleiters können mehrere unterschiedliche Kaltleiter parallelgeschaltet sein, die zeitlich nacheinander ansprechen.

Aus der Veröffentlichung von P. Bujard und J. P. Ansermet, THERMALLY CONDUCTIVE ALUMINIUM NITRIDE-FILLED EPOXY in: 5. IEEE SEMI-THERM Symposium (1989), S. 126 - 130, ist es bekannt, bei einer mit Aluminiumnitrid (AlN) gefüllten Polymermatrix, wie sie zur Herstellung von Kaltleitern geeignet ist, einen Füllgrad von 62 Vol% zu erreichen.

Bei Stromrichtern, die einen Gleichspannungszwischenkreis aufweisen, können im Kurzschlußfall durch eine impedanzarme Entladung der Zwischenkreiskondensatoren sehr hohe Kurzschlußströme im Zwischenkreis auftreten, die ohne Schutzmaßnahme zur Zerstörung von aktiven Bauelementen führen können und Konstruktionsteile mit hohen Kräften beanspruchen und verformen.

Aus der DE 3 710 799 A1 ist es bekannt, bei einer Wechselrichterschaltung in Reihenschaltung zu Kondensatoren eine Schmelzsicherung vorzusehen, die durchschmilzt und den Schaltkreis unterbricht, wenn ein Gleichstromkondensator kurzgeschlossen wird. Es vergeht eine Zeitspanne von ggf. einigen 100 ms ab dem Zeitpunkt des Kurzschlusses der Leitungen der Wechselrichterschaltung, bevor ein Detektor für das Durchschmelzen der Sicherung verzögert diesen Kurzschluß wahrnimmt. Wahrgenommen wird nur ein interner Kurzschluß eines Gleichstromkondensators. Bei einem internen Kurzschluß eines Kondensators werden dadurch die zugehörigen Geräte und Schaltungen geschützt. Anstelle der Schmelzsicherung kann auch für Gruppen von in Reihe geschalteten Gleichstromkondensatoren als Störungsdetektor ein Differentialverstärker vorgesehen sein, der eine Störung anhand einer Potentialdifferenz detektiert.

Für Traktionsstromrichter, die erhöhten Vibrations- und Stoßbeanspruchungen ausgesetzt sind, ist der Einsatz herkömmlicher Schmelzsicherungen auf Grund ihrer geringen Zuverlässigkeit nicht möglich bzw. von den Bahnbetreibern unerwünscht. Schmelzsicherungen sind große Bauelemente mit viel Verkabelungsaufwand, die hohe Gegenspannungen aufbauen, was für den Betrieb von Stromrichtern mit abschaltbaren Halbleitern störend ist. Geforderte Ansprechempfindlichkeiten von weniger als 100 µs sind schwer, wenn überhaupt, ausführbar.

Wünschenswert für den Stromrichterbetrieb ist eine deutliche Reduktion bzw. der Entfall der Zwischenkreisinduktivität. Ohne Schutzmaßnahme steigen jedoch hierdurch im Kurzschlußfall die Kurzschlußstromamplituden auf Werte bis zu 1 MA an, die derzeit in Traktionssystemen mit Stromrichtern mechanisch nicht beherrscht werden können.

### DARSTELLUNG DER ERFINDUNG

Die Erfindung, wie sie in den Patentansprüchen 1 und 2 definiert ist, löst die Aufgabe, einen für Nennströme von > 100 A geeigneten reversiblen Überstrombegrenzer der eingangs genannten Art derart weiterzuentwickeln, daß mit ihm Kurzschlußströme innerhalb von 10 µs auf Werte begrenzt werden können, die unterhalb der Zerstörungsgrenze yon passiven Komponenten der zu schützenden elektrischen Anlagen oder Schaltkreise liegen.

Ein Vorteil der Erfindung besteht darin, daß die Schutzeinrichtung reversibel arbeitet, lichtbogenfrei anspricht sowie niederinduktiv und raumsparend einsetzbar ist. Die Schutzschaltung ist verlustarm, rüttelfest und in einen bestehenden Kühlkreislauf integrierbar; sie spricht autonom an und ermöglicht eine flexible Applikation. Die Zuverlässigkeit des Schutzsystems wird durch zusätzliche elektronische Baugruppen und Komponenten nicht beeinträchtigt.

Wird die Strombegrenzerschaltung in Reihenschaltung zu Stromrichterventilen eingesetzt, so kann auf eine Stromanstiegsbegrenzungsdrossel verzichtet werden.

Gemäß einer vorteilhaften Ausgestaltung der Erfindung kann eine Kühlung bei einer schon vorhandenen Flüssigkeitskühlung in deren Kühlkreislauf integriert werden.

Durch Anpassung der Aktivteilbemessung der Kaltleiter kann das Kurzschlußverhalten der Schutzschaltungen den unterschiedlichen elektrischen Kennwerten verschiedener Stromrichtertypen flexibel angepaßt werden.

Mit dem erfindungsgemäßen Schutz ist es möglich, die intern in einem Stromrichter gespeicherte Energie einer Kondensatorbank von einem Kurzschluß in den Stromrichterschaltern bzw. Halbleitern zu entkoppeln. Dabei kann die Vorrichtung zur Strombegrenzung entweder im Gleichspannungszwischenkreis oder in den Phasenbausteinen angeordnet werden. Auf Grund der Modularität der Zwischenkreis-Kondensatorbatterie, die ggf. bis zu 40 parallelgeschaltete Kondensatoren aufweist, kann der Kurzschlußschutz wahlweise an einem oder an mehreren parallelgeschalteten Kondensatoren angeordnet werden.

### KURZE BESCHREIBUNG DER ZEICHNUNGEN

Die Erfindung wird nachstehend anhand von Ausführungsbeispielen erläutert. Es zeigen:
- Fig. 1: eine 2Punkt-Stromrichterschaltung mit einem Antriebsstromrichter, der über einen Gleichspannungszwischenkreis mit einem Netzstromrichter verbunden ist, wobei im Kurzschlußpfad von Kondensatoren des Gleichspannungszwischenkreises ein reversibler Strombegrenzer angeordnet ist,
- Fig. 2: eine Stromrichterschaltung gemäß Fig. 1 mit 3Punkt-Stromrichtern,
- Fig. 3 - 5: unterschiedliche Strombegrenzerschaltungen mit Kaltleitern, Varistoren und Induktivitäten,
- Fig. 6: eine konstruktives Ausführungsbeispiel der Widerstandsbahn eines Kaltleiters einer Strombegrenzerschaltung gemäß den Fig. 3 - 5,
- Fig. 7: den Prinzipaufbau eines erdpotentialfrei betreibbaren Kaltleiters mit Brauchwasserkühlung für große elektrische Leistungen sowie
- Fig. 8 und 9: den Prinzipaufbau von besonders niederinduktiven Kaltleitern.

### WEGE ZUR AUSFÜHRUNG DER ERFINDUNG

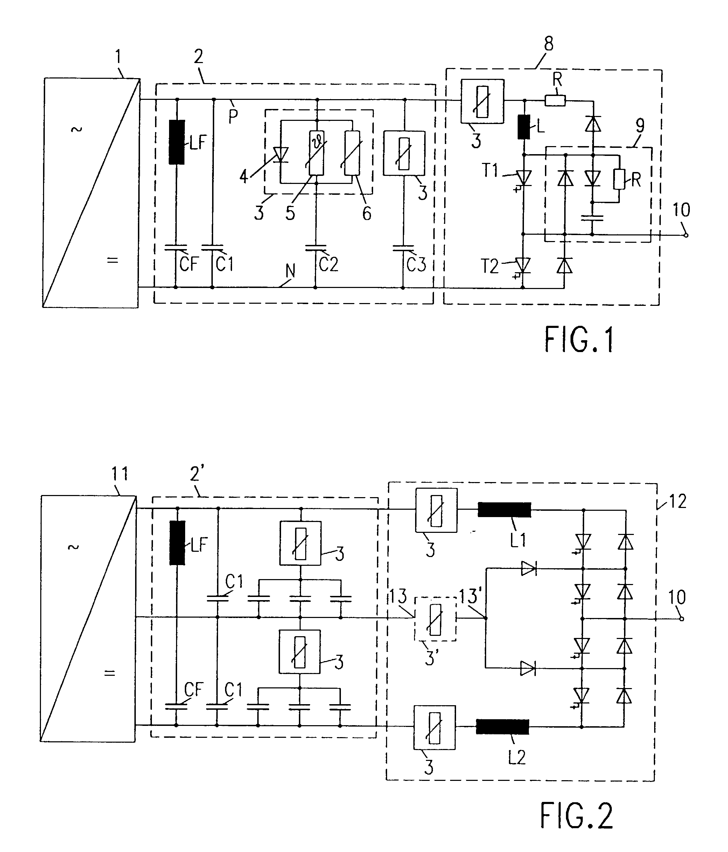

Fig. 1 zeigt einen Netzstromrichter oder 1. Stromrichter (1), der gleichspannungsseitig über einen Gleichspannungszwischenkreis (2) mit einem Antriebsstromrichter bzw. 2. Stromrichter (8) elektrisch verbunden ist.

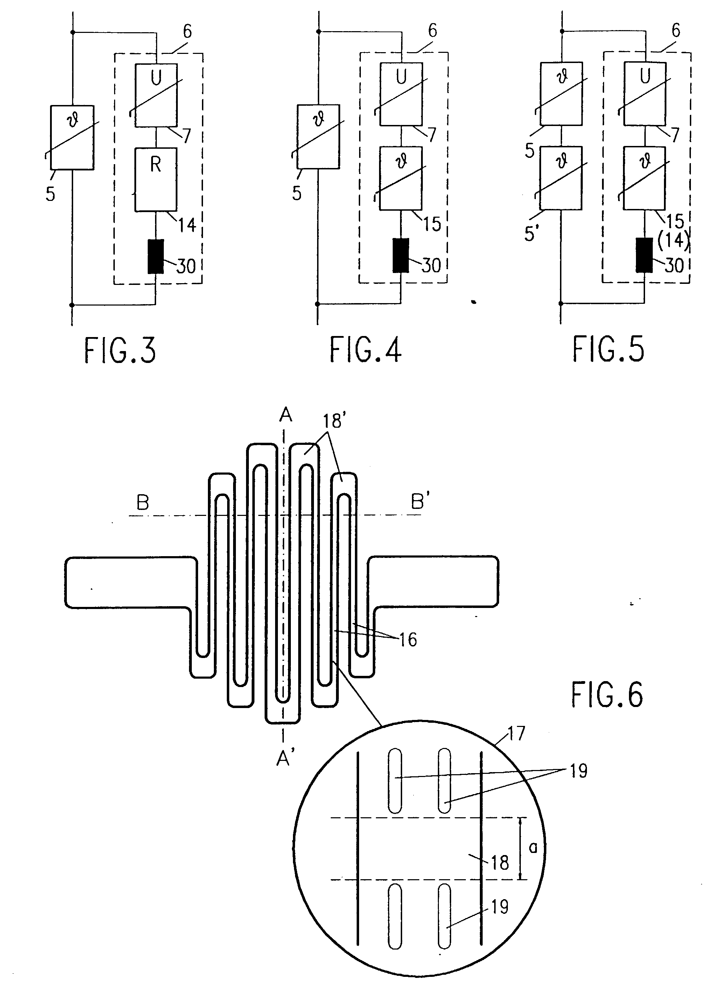

Der Gleichspannungszwischenkreis (2) weist zwischen einem positiven Pol bzw. einer positiven Polplatte (P) und einem negativen Pol bzw. einer negativen Polplatte (N) ein Filter zur Dämpfung von Zwischenkreisoberschwingungen aus einer Reihenschaltung einer Filterdrossel (LF) und eines Filterkondensators (CF) auf; ferner Zwischenkreiskondensatoren bzw. Kondensatoren (C1, C2, C3), wobei die Kondensatoren (C2, C3) mit je einem reversiblen Kurzschlußstrombegrenzer (3) in Reihe geschaltet sind. Der reversible Kurzschlußstrombegrenzer (3) weist eine Parallelschaltung einer in Sperrichtung eines Kurzschlußpfades gepolten Diode (4), eines PTC-Widerstandes bzw. Kaltleiters (5) und eines Nebenschlußwiderstandszweiges (6) auf, der einen Überspannungsableiter bzw. Varistors (7) umfaßt, vgl. die Fig. 3 - 5. Der Kaltleiter (5) und der Nebenschlußwiderstandszweig (6) sind im Kurzschlußstrombegrenzer (3) stets vorhanden; die Diode (4) kann parallelgeschaltet sein.

Die beiden Stromrichter (1, 8) sind als 2Punkt-Stromrichter ausgeführt, wobei für den Stromrichter (8) in Fig. 1 nur zwei Hauptventilzweige mit 2 GTO-Thyristoren (T1, T2) als Hauptventilen für eine Wechselstromphase, die an einer Wechselspannungsklemme (10) abgreifbar ist, gezeigt sind. Für 3phasigen Wechselstrom sind entsprechend 6 gleichartig aufgebaute Hauptventilzweige erforderlich. Parallel zu jedem Hauptventil (T1, T2) ist eine Thyristorbeschaltung (9) vorgesehen, wobei der Übersichtlichkeit halber nur diejenige zum GTO-Thyristor (T1) dargestellt ist. Es versteht sich, daß die Thyristorbeschaltung (9) auch eine andere Schaltung als die dargestellte aufweisen könnte. Im Strompfad der beiden Hauptventile (T1, T2) ist eine Drossel bzw. di/dt-Begrenzungsdrossel (L) über einen reversiblen Kurzschlußstrombegrenzer (3) mit dem positiven Pol (P) des Gleichspannungszwischenkreises (2) verbunden. In einem Parallelzweig zur di/dt-Begrenzungsdrossel (L) ist eine Diode mit einem ohmschen Widerstand in Reihe geschaltet. Diese di/dt-Begrenzungsdrossel (L) kann bei Verwendung des erfindungsgemäßen Kurzschlußstrombegrenzers (3) sehr klein gehalten werden oder entfallen.

Der reversible Kurzschlußstrombegrenzer (3) im 2. Stromrichter (8) kann entfallen, wenn reversible Kurzschlußstrombegrenzer (3) im Gleichspannungszwischenkreis (2) vorgesehen sind.

Andererseits können die reversiblen Kurzschlußstrombegrenzer (3) im Gleichspannungszwischenkreis (2) entfallen, wenn ein reversibler Kurzschlußstrombegrenzer (3) im 2. Stromrichter (8) vorgesehen ist.

Fig. 2 zeigt als 2. Ausführungsbeispiel eine der Fig. 1 ähnliche Stromrichterschaltung, die anstelle von 1. und 2. 2Punkt-Stromrichtern (1, 8) 1. und 2. 3Punkt-Stromrichter (11, 12) aufweist. Gleiche Bauelemente sind gleich bezeichnet. In einem Gleichspannungszwischenkreis (2') ist für jede Potentialhälfte ein reversibler Kurzschlußstrombegrenzer (3) in Reihe zu einer Kondensatorbank geschaltet, die mehrere parallelgeschaltete Kondensatoren aufweist. Der Vorteil dieser Beschaltung besteht in einer Kostenreduktion der Schutzbeschaltung, da weniger reversible Kurzschlußstrombegrenzer (3, 3') benötigt werden, bzw. in einer geringeren Systemdiversifizierung, da weniger Typen von reversiblen Kurzschlußstrombegrenzern (3, 3') für das Stromrichtersortiment erforderlich sind.

Bei dem 3Punkt-Stromrichter (12) sind zu den Hauptventilen jedes Hauptventilzweiges di/dt-Begrenzungsdrosseln (L1, L2) in Reihe geschaltet, welche mit dem positiven Pol (P) bzw. mit dem negativen Pol (N) des Gleichspannungszwischenkreises (2') elektrisch verbunden sind. Sie können sehr klein sein oder weggelassen werden. Anstelle der beiden reversiblen Kurzschlußstrombegrenzer (3) kann im Nullpunkt- bzw. Mittelpunktpfad des Stromrichters (12) ein gestrichelt dargestellter reversibler Kurzschlußstrombegrenzer (3') vorgesehen sein, welcher einerseits mit einem Mittelpunktleiter (13') dieses Mittelpunktpfades und andererseits mit einem Mittelpunktleiter (13) des Gleichspannungszwischenkreises (2') elektrisch verbunden ist. Dadurch wird für viele Störfälle ein ausreichender Schutz bewirkt. Es versteht sich, daß auch bei diesem Ausführungsbeispiel die reversiblen Kurzschlußstrombegrenzer (3, 3') im 2. Stromrichter (12) entfallen können, wenn reversible Kurzschlußstrombegrenzer (3) im Gleichspannungszwischenkreis (2') den gewünschten Schutz gewährleisten, und umgekehrt.

Wichtig ist, daß im Kurzschlußstrompfad mindestens eines Zwischenkreiskondensators (C2, C3) ein reversibler Kurzschlußstrombegrenzer (3, 3') vorgesehen ist. Dadurch werden etwaige Kurzschlußentladeströme der Kondensatoren (C2, C3) auf Werte begrenzt, die mindestens unterhalb der Zerstörungsgrenze der passiven Komponenten und der Stromschienen liegen, idealerweise unterhalb der Zerstörungsgrenze der aktiven Bauelemente. Die hierfür erforderlichen Reaktionszeiten der Schutzschaltung liegen innerhalb von 10 µs.

Die Schutzschaltungen gemäß den Fig. 1 und 2 gewährleisten sowohl bei einem Teilkurzschluß als auch bei einem Vollkurzschluß eines Stromrichters (1, 8; 11, 12) einen guten Schutz.

Durch die Parallelschaltung einer Diode (4) zu einem Kaltleiter (5) kann die thermische Dauerstrombelastung der reversiblen Kurzschlußstrombegrenzer (3, 3') reduziert werden. Bei Betrieb unter Nennbedingungen leitet die Diode (4) während einer Halbperiode der Zwischenkreis-Pulsfrequenz und reduziert so den Effektivstrom. Im Kurzschlußfall sperrt die Diode (4), und die Schutzfunktion des reversiblen Kurzschlußstrombegrenzers (3, 3') ist voll wirksam.

Läßt man einen oder mehrere Zwischenkreiskondensatoren (C1) ohne reversiblen Kurzschlußstrombegrenzer (3), während die übrigen Zwischenkreiskondensatoren (C2, C3) einen aufweisen, so erreicht man einen Schutz gegen Abschaltüberspannungen. Die Kurzschlußstromamplitude des Gesamtstromes im Gleichspannungszwischenkreis erhöht sich jedoch anteilmäßig.

Fig. 3 zeigt einen Kurzschlußstrombegrenzer (3), bei dem zu einem Kaltleiter (5) in einem 1. bzw. Hauptstrompfad ein Nebenschlußwiderstandszweig (6) mit einer Reihenschaltung aus einem Varistor (7), einem ohmschen Widerstand (14) und einer Drossel oder Induktivität (30) parallelgeschaltet ist. In einem Fehler- bzw. Kurzschlußfall erwärmt sich der Kaltleiter (5) über seine Ansprechtemperatur hinaus, so daß dessen Widerstand stark ansteigt und den Strom begrenzt. Eine thermische Zerstörung des Kaltleiters (5) wird durch eine Kommutation des Kurzschlußstromes auf den Nebenschlußwiderstandszweig (6) vermieden. Der Kurzschlußstrom wird hierbei auf Werte begrenzt, die für den Gleichspannungszwischenkreis (2) unschädlich sind. Nach der Entladung der in Reihe zum Kurzschlußstrombegrenzer (3) geschalteten Kondensatoren (C2, C3) und Abtrennen des 1. Stromrichters (1) von einer nicht dargestellten einspeisenden Energiequelle kühlt der Kaltleiter (5) ab und ist wieder betriebsbereit.

Der Kaltleiter (5) kann ein nichtsperrender Kaltleiter auf einer Metallbasis mit Widerstandssprüngen auf ca. das 10fache, vorzugsweise auf weniger als das 100fache seines Kaltwiderstandes, oder ein sperrender Kaltleiter auf der Basis von gefüllten Polymeren sein, die Widerstandsprünge auf mehr als das 100fache, vorzugsweise auf mehr als das 10⁴fache des Kaltwiderstandes aufweisen.

Wesentlich für die Schaltung gemäß Fig. 3 ist die Verwendung eines Varistors (7), vorzugsweise auf der Basis von Metalloxid, dessen höchstzulässige Dauerbetriebsspannung vorzugsweise unterhalb der Betriebsspannung des Gleichspannungszwischenkreises (2) liegt. Der in Reihe zum Varistor (7) geschaltete ohmschen Widerstand (14) verbessert das Strombegrenzungsverhalten der Schaltung.

Anstelle des ohmschen Widerstandes (14) gemäß Fig. 3 kann ein bei Betriebsspannung sperrender oder nichtsperrender Kaltleiter (15) gemäß Fig. 4 verwendet werden. Dies führt zu einem verbesserten Strombegrenzungsverhalten des Kurzschlußstrombegrenzers (3). Weisen beide Kaltleiter (5, 15) eine Widerstands-Temperaturcharakteristik mit hohen Widerstandssprüngen auf Widerstandswerte auf, die deutlich größer als der 100fache, vorzugsweise größer als der 10⁴fache Kaltwiderstandswert sind (sperrender Kaltleiter (5)), so kann ein stromsperrendes Verhalten der Gesamtschaltung erreicht werden. Dadurch wird es möglich, den Kurzschlußstrombegrenzer (3) als Schutzelement in elektrischen Energieverteilungssystemen oder -netzen mit länger anstehenden Spannungen am Kurzschlußstrombegrenzer (3) einzusetzen.

Der Kurzschlußstrombegrenzer (3) gemäß Fig. 5 unterscheidet sich von demjenigen der Fig. 4 dadurch, daß im Haupstrompfad ein nichtsperrender Kaltleiter (5) mit einem sperrenden Kaltleiter (5') in Reihe geschaltet ist. Dabei wird der sperrende Kaltleiter (5') so ausgelegt, daß sich sein Widerstand erst nach einem Ansprechen des nichtsperrenden Kaltleiters (5) erhöht, d. h., daß er zeitlich verzögert anspricht, vgl. z. B. die eingangs genannte CH-A-581 377. Dadurch wird der Kaltleiter (5') elektrisch und thermisch entlastet. Im Nebenschlußwiderstandszweig (6) kann der Kaltleiter (15) durch einen ohmschen Widerstand (14) gemäß Fig. 3 ersetzt sein. In beiden Fällen ist die Schaltung gemäß Fig. 5 geeignet auch unter Überlastbedingungen zu schützen, wobei der Varistor (7) sperrend bleibt. Die Dauerbetriebsspannung des Varistors (7) muß in diesem Fall höher als die Betriebsspannung des Gleichspannungszwischenkreises (2) sein.

Falls eine hohe Nennstromtragfähigkeit von einigen 100 A bei kurzer Ansprechzeit im Kurzschlußfall und bei geringem Bauvolumen des Kurzschlußstrombegrenzers (3) gefordert wird, müssen zumindest die Kaltleiter (5, 5') des Kurzschlußstrombegrenzers (3) gekühlt werden. Diese Kühlung kann bei Hochleistungsstromrichtern mit einer vorhandenen Flüssigkeitskühlung in den Kühlkreislauf integriert werden. Die Gesamtverluste der Schutzeinrichtung sind für die Verlustbilanz des Stromrichters (1, 8; 11, 12) unbedeutend.

Durch die im Nebenschlußwiderstandszweig (6) vorzugsweise vorgesehene Induktivität (30) kann eine Verbesserung des Strombegrenzungsverhaltens der Gesamtschaltung erreicht werden.

Fig. 6 zeigt die Form einer Widerstandsbahn eines nichtsperrenden Kaltleiters (5), der in seinem zentralen Teil mäanderförmig und symmetrisch bezüglich einer Schnittebene (A - A') ausgebildet ist.

Ausgangsbasis ist eine Metallfolie, die mittels eines üblichen Schneidverfahrens, wie z. B. Wasserstrahlschneiden oder Laserschneiden, oder durch einen fotolithographischen Prozeß im zentralen Teil mäanderförmig strukturiert wird. Zur Erreichung einer gleichmäßigen Stromverteilung im Falle von Inhomogenitäten (heiße Stellen), sind widerstandsbildende Mäanderbahnen (16) in deren Längsrichtung mindestens einfach, vorzugsweise jedoch mehrfach durch zueinander parallele längliche Aussparungen (19) unterteilt, vgl. die ausschnittsweise Darstellung einer Mäanderbahn (16) in einem Ausschnitt (17). Zwischen in Längsrichtung aufeinanderfolgenden Aussparungen (19) sind aussparungsfreie Kühlinseln (18) mit einem vorgebbaren Längsabstand (a) vorgesehen, die eine erhöhte Nennstromtragfähigkeit ohne Rückwirkung auf das dynamische Ansprechverhalten unter Kurzschlußbedingungen erlauben. Mit zunehmendem Längsabstand (a) der einzelnen Aussparungen (19) voneinander kann die Nennstromtragfähigkeit weiter verbessert werden. Weitere Kühlinseln (18') sind endseitig an den Mäanderbahnen (16) vorgesehen.

Durch eine Faltung der strukturierten Metallfolie um die Schnittebene (A - A') um 180° wird ein besonders niederinduktiver Aufbau mit symmetrischer Zu- und Rückführung des Stromes erreicht.

Als Ausgangsbasis für den nichtsperrenden Kaltleiter (5) kann ein vorzugsweise ferromagnetisches Metall oder eine Metallegierung verwendet werden. Besonders geeignet sind Materialien auf der Basis von Nickel, Eisen oder Kobalt und deren Legierungen. Der gegenüber nichtferromagnetischen reinen Metallen besonders hohe positive Temperaturkoeffizient des spezifischen Widerstandes dieser Materialien weist ein für die Anwendung günstiges nichtlineares Verhalten auf mit einem Maximum im Bereich der Curietemperatur. Prinzipiell können jedoch auch nichtferromagnetische Metalle, wie Beryllium oder Ruthenium, mit einem Temperaturkoeffizienten des Widerstandes von > 4 ^{.} 10⁻³ K⁻¹ verwendet werden.

Anstelle einer strukturierten Metallfolie kann auch eine mittels eines chemischen oder elektrochemischen Prozesses erzeugte Schicht der vorstehend beschriebenen Materialzusammensetzung verwendet werden.

Das notwendige dynamische Ansprechverhalten des Kaltleiters (5) unter Kurzschlußbedingungen wird durch die Ausbildung einer geringen Querschnittsfläche des Aktivteiles erreicht. Typische Werte der Querschnittsfläche liegen für eine Beschaltung gemäß den Fig. 1 und 2 im Bereich von 0,1 mm² bis 5 mm², vorzugsweise im Bereich von 0,5 mm² bis 1,5 mm². Die Kaltwiderstandswerte bei Zimmertemperatur liegen im Bereich von einigen 10 mΩ - 100 mΩ.

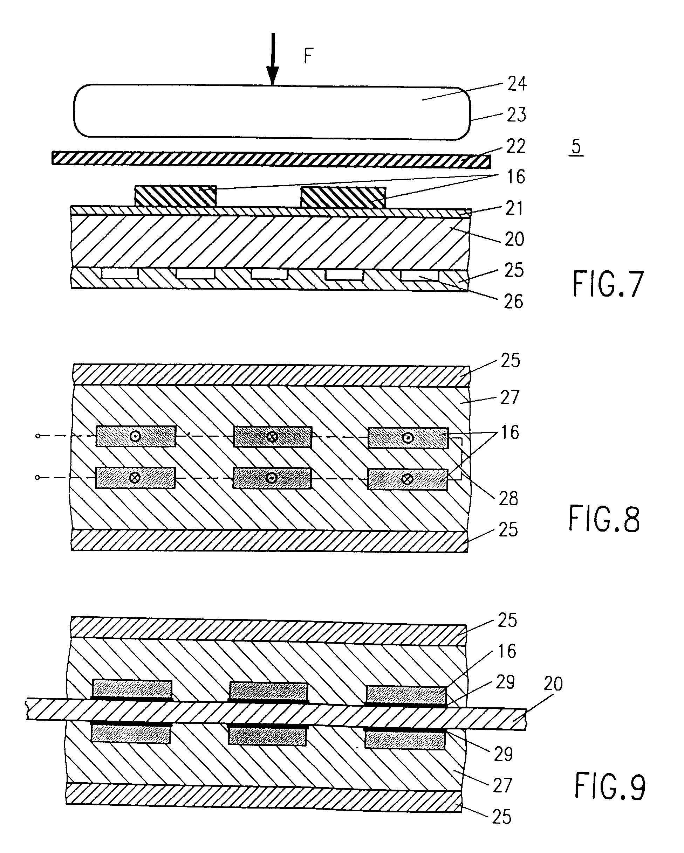

Fig. 7 zeigt den Prinzipaufbau eines nichtsperrenden, erdpotentialfrei betreibbaren Kaltleiters (5), dessen Widerstandsbahn in Fig. 6 dargestellt ist, in auseinandergezogener Darstellung ausschnittsweise im Querschnitt in einer zur Schnittebene (A - A') orthogonalen Schnittebene (B - B') in Fig. 6. Eine elektrisch isolierende, thermisch leitfähige Isolations- bzw. Keramikschicht (20), z. B. aus AlN oder BN oder Al₂O₃, steht mit einer 1. Hauptfläche mit einem metallischen Kühlelement (25) in einem elektrisch und thermisch gutleitenden Kontakt. Das Kühlelement (25) weist angrenzend an die 1. Hauptfläche der Keramikschicht (20) Kühlschlitze (26) auf, die im Betrieb von elektrisch leitfähigem Wasser (Brauchwasser) vorzugsweise turbulent durchströmt sind. Eine der 1. Hauptfläche gegenüberliegende 2. Hauptfläche der Keramikschicht (20) ist mit einer elektrisch isolierenden Wärmeleitschicht (21), z. B. aus Öl oder einer Wärmeleitpaste auf Silikonbasis, mit einer Dicke im Bereich von 10 µm - 100 µm bedeckt. Mäanderbahnen (16) des Widerstandskörpers des Kaltleiters (5), vgl. Fig. 6, sind zwischen diese Wärmeleitschicht (21) und eine elektrisch isolierende, vorzugsweise thermisch leitfähige, flexible, hochtemperaturbeständige Polymerfolie (22), z. B. aus einem Silikonelastomer, mit einer Dicke im Bereich von 0,2 mm - 10 mm, vorzugsweise im Bereich von 1 mm - 5 mm, gepreßt. Zum Anpressen kann ein Druckausgleichkissen oder Druckausgleichelement (23) vorgesehen sein, auf welches eine zur 2. Hauptfläche der Keramikschicht (20) orthogonale Kraft (F) einwirkt. Das Druckausgleichelement (23) kann z. B. aus einer dünnen, flexiblen Metallfolie bestehen, die zu einer geschlossenen Hülle verschweißt ist und eine Dicke im Bereich von 0,2 cm - 3 cm aufweist. Das Druckausgleichelement (23) ist mit einem dielektrischen oder elektrisch leitfähigen Fluid (24) mit einer Siedetemperatur über vorzugsweise 150 °C gefüllt. Als hochsiedende Fluide (24) können z. B. Karboxylatester, Polyolester, polymere Dimethylsiloxane oder aliphatische Pentaerythritester verwendet werden. Wahlweise kann zur Erhöhung der Nennstromtragfähigkeit ein weiterer, nicht dargestellter Kühlkörper in direkten Kontakt mit dem Druckausgleichelement (23) gebracht werden. Durch das Druckausgleichelement (23) wird einerseits eine gleichmäßige Anpressung der Widerstandsbahnen (16) an die Keramikschicht (20) und andererseits eine Ausgleichkühlung durch Konvektion zum Schutz der Widerstandsbahnen (16) vor einer partiellen Überhitzung erreicht.

Das Druckausgleichelement (23) kann insbesondere dann weggelassen werden, wenn die hochtemperaturbeständige Polymerfolie (22) aus Silikonelastomer oder aus einem anderen Elastomerwerkstoff besteht, eine Dicke im Bereich von 1,5 mm - 10 mm und eine Shorehärte im Bereich von 10 Shore A - 100 Shore A aufweist.

Die Fig. 8 und 9 zeigen ausschnittsweise besonders niederinduktive Kaltleiter (5) im Querschnitt. Die Widerstands- bzw. Mäanderbahnen (16) des Kaltleiters (5) sind hier in eine mit anorganischen, thermisch leitfähigen Partikeln, wie z. B. aus AlN, BN, Al₂O₃, gefüllte Polymermatrix (27) integriert bzw. eingebettet. Die Polymermatrix (27) besteht aus Hochtemperatur-Duromeren und/oder Elastomeren und/oder Hochtemperatur-Thermoplasten. Vorzugsweise besteht die Polymermatrix (27) aus Polyetheretherketonen (PEEK) und/oder Polyetherimiden (PEI) und/oder Polysulfonen (PSU) und/oder Polyethersulfonen (PES). Es wird vorzugsweise ein bimodal verteiltes Pulver, d.h. Pulver, dessen Partikelgröße bzw. - durchmesser mindestens 2 Häufigkeitsmaxima aufweist, als Füller verwendet. Zur Erhöhung der thermischen Leitfähigkeit kann hierdurch der im allgemeinen maximal erreichte Füllgrad von 62 Vol%, vgl. die eingangs genannte Veröffentlichung von P. Bujard und J. P. Ansermet, noch gesteigert werden. Die elastischen Eigenschaften der Polymermatrix (27) ermöglichen einen guten thermischen Kontakt zu deren randseitigen metallischen Kühlkörpern bzw. Kühlelementen (25), die vorzugsweise durch ein Gemisch aus Wasser und Glykol gekühlt werden. In die Polymermatrix (27) sind wenigstens annähernd geometrisch deckungsgleiche Widerstands- bzw. Mäanderbahnen (16) eingebettet, durch welche ein elektrischer Strom antiparallel geführt wird. Gestrichelt ist eine elektrische Leitung (28) angedeutet, welche die Mäanderbahnen (16) stirnseitig elektrisch derart verbindet, daß benachbarte Mäanderbahnen (16) in antiparalleler Richtung vom Strom durchflossen werden.

Bei der Ausführung eines Kaltleiters (5) gemäß Fig. 10 ist auf die Mäanderbahnen (16) ein- oder beidseitig eine ca. 1 µm dicke Cr/Ni-Schicht als Haftschicht (29) aufgebracht. Auf diese Haftschicht (29) wird eine Nickel- oder Eisenschicht mittels eines galvanischen chemischen Prozesses oder eines Lötprozesses aufgebracht. Bei Verwendung von Eisen kann in einem 2. Schritt eine Nickeloder Aluminiumschicht als Korrosionsschutz aufgebracht sein. Mit dieser Schicht (29) stehen die Mäanderbahnen (16) in elektrisch und thermisch gutleitendem Kontakt mit einer Keramikschicht (20), wobei sich je 2 Mäanderbahnen (16) wenigstens annähernd geometrisch deckungsgleich an der Keramikschicht (20) gegenüberliegen. Ähnlich wie bei Fig. 9 sind die Keramikschicht (20) und die Mäanderbahnen (16) des Kaltleiters (5) in eine Polymermatrix (27) eingebettet und mittels randseitiger Kühlelemente (25), vorzugsweise durch ein Gemisch aus Wasser und Glykol, gekühlt.

### BEZEICHNUNGSLISTE

- 1, 11: Netzstromrichter, 1. Stromrichter
- 2, 2': Gleichspannungszwischenkreise
- 3, 3': Kurzschlußstrombegrenzer, Strombegrenzer
- 4: Diode
- 5, 5', 15: Kaltleiter, PTC-Widerstände
- 6: Nebenschlußwiderstandszweig mit Varistor 7
- 7: Varistor, Überspannungsableiter
- 8, 12: Antriebsstromrichter, 2. Stromrichter
- 9: Thyristorbeschaltung von T1, T2
- 10: Wechselspannungsklemme von 8
- 13, 13': Mittelpunktleiter
- 14: ohmscher Widerstand
- 16: Mäanderbahn von 5, Widerstandsbahn aus einem Kaltleiterwerkstoff
- 17: Ausschnitt von 16
- 18, 18': Kühlinseln, Kühlstege
- 19: Aussparungen in 16
- 20: Isolation, Keramikschicht
- 21: Wärmeleitschichten
- 22: hochtemperaturbeständige Polymerfolie
- 23: Druckausgleichelement, Druckausgleichkissen
- 24: dielektrisches Fluid
- 25: Kühlelement
- 26: Kühlschlitze in 25
- 27: gefüllte Polymermatrix
- 28: elektrische Leitung
- 29: Chrom-Nickelschicht, Haftschicht
- 30: Induktivität, Drossel

- a: Längsabstand von 19
- A - A': Schnittebene in Fig. 6
- B - B': Schnittebene in Fig. 6, senkrecht zu A - A'
- C1, C2, C3: Zwischenkreiskondensatoren
- CF: Filterkondensator
- F: Kraft
- L, L1, L2: Drosseln, di/dt-Begrenzungsdrosseln
- LF: Filterdrossel
- N: negativer Pol, negative Polplatte
- P: positiver Pol, positive Polplatte
- T1, T2: GTO-Thyristoren

## Patentansprüche

1. Reversibler Überstrombegrenzer (3)
a) mit mindestens einem Kaltleiter (5, 5') in einem 1. Stromzweig,
b) mit mindestens einem Varistor (7) in einem zum 1. Stromzweig elektrisch parallelgeschalteten 2. Stromzweig (6),
dadurch gekennzeichnet,
c) daß in dem 2. Stromzweig (6) in Reihenschaltung zu dem mindestens einen Varistor (7) ein ohmscher Widerstand (14) geschaltet ist.

2. Reversibler Überstrombegrenzer (3)
a) mit mindestens einem Kaltleiter (5, 5') in einem 1. Stromzweig,
b) mit mindestens einem Varistor (7) in einem zum 1. Stromzweig elektrisch parallelgeschalteten 2. Stromzweig (6),
dadurch gekennzeichnet,
c) daß in dem 2. Stromzweig (6) in Reihenschaltung zu dem mindestens einen Varistor (7) ein Kaltleiter (15) geschaltet ist, der derart bemessen ist, daß ein Überstrom innerhalb von 10 µs auf einen Stromwert begrenzt wird, welcher unterhalb der Zerstörungsgrenze von passiven Komponenten liegt.

3. Reversibler Überstrombegrenzer (3) nach Anspruch 1 oder 2, dadurch gekennzeichnet, daß die Reihenschaltung in dem 2. Stromzweig (6) eine Induktivität (30) aufweist.

4. Reversibler Überstrombegrenzer (3) nach einem der vorhergehenden Ansprüche, dadurch gekennzeichnet,
a) daß der 1. Stromzweig wenigstens 2 in Reihe geschaltete Kaltleiter (5, 5') aufweist,
b) wovon wenigstens ein 1. Kaltleiter (5) beim Erhitzen Widerstandsprünge auf weniger als das 100fache seines Kaltwiderstandes aufweist, und
c) wovon wenigstens ein 2. Kaltleiter (5') beim Erhitzen Widerstandsprünge auf mehr als das 100fache,
d) insbesondere auf mehr als das 10⁴fache seines Kaltwiderstandes aufweist.

5. Reversibler Überstrombegrenzer (3) nach einem der vorhergehenden Ansprüche, dadurch gekennzeichnet, daß in einem zu dem 1. Stromzweig parallelgeschalteten 3. Stromzweig eine Diode (4) in Sperrichtung eines Kurzschlußpfades geschaltet ist.

6. Reversibler Überstrombegrenzer (3) nach einem der vorhergehenden Ansprüche, dadurch gekennzeichnet,
a) daß eine 1. Hauptfläche des mindestens einen Kaltleiters (5, 5') über eine elektrisch isolierende, gut wärmeleitende Wärmeleitschicht (21) mit einer 1. Hauptfläche einer Keramikschicht (20) in gut wärmeleitender Verbindung steht,
b) daß eine der 1. Hauptfläche gegenüberliegende 2. Hauptfläche der Keramikschicht (20) mit einem Kühlelement (25) in gut wärmeleitender Verbindung steht und
c) daß eine der 1. Hauptfläche gegenüberliegende 2. Hauptfläche der Widerstandsbahn (16) mit einer Polymerfolie (22) aus Silikonelastomer oder aus einem anderen Elastomerwerkstoff in Druckverbindung steht.

7. Reversibler Überstrombegrenzer nach Anspruch 6, dadurch gekennzeichnet,
a) daß die Polymerfolie (22) eine Dicke im Bereich von 1,5 mm - 10 mm und
b) eine Shorehärte im Bereich von 10 Shore A - 100 Shore A aufweist.

8. Reversibler Überstrombegrenzer (3) nach Anspruch 6 oder 7, dadurch gekennzeichnet, daß die Wärmeleitschicht (21) eine Wärmeleitpaste auf Silikonbasis ist und eine Dicke im Bereich von 10 um - 100 um aufweist.

9. Reversibler Überstrombegrenzer nach einem der Ansprüche 6 bis 8, dadurch gekennzeichnet,
a) daß die Polymerfolie (22) mit einem Druckausgleichelement (23) in Druckverbindung steht,
b) insbesondere, daß das Druckausgleichelement (23) aus einer Metallfolie besteht, die eine geschlossene Hülle bildet, welche mit einem dielektrischen oder elektrisch leitfähigen Fluid (24) gefüllt ist, das eine Siedetemperatur über 150 °C hat.

10. Reversibler Überstrombegrenzer (3) nach einem der vorhergehenden Ansprüche, dadurch gekennzeichnet,
a) daß der mindestens eine Kaltleiter (5, 5') mindestens eine Widerstandsbahn (16) aus einem Kaltleiterwerkstoff aufweist,
b) welche in eine Polymermatrix (27) eingebettet ist und
c) über diese mit mindestens einem Kühlelement (25) in thermisch leitender Verbindung steht,
d) daß wenigstens 2 voneinander beabstandete und wenigstens annähernd geometrisch deckungsgleiche Widerstandsbahnen (16) in zwei übereinanderliegenden Ebenen in die Polymermatrix (27) so eingebettet sind, daß sich die wenigstens annähernd geometrisch deckungsgleichen Teile der Widerstandsbahnen (16) gegenüberliegen und
e) daß die Widerstandsbahnen (16) elektrisch so miteinander verbunden sind, daß im Betrieb einander gegenüberliegende Widerstandsbahnen (16) von einem Strom in antiparalleler Richtung durchflossen werden,
f) insbesondere, daß die Widerstandsbahn (16) mehrfach durch zueinander parallele Aussparungen (19) unterteilt ist.

11. Reversibler Überstrombegrenzer nach Anspruch 10, dadurch gekennzeichnet,
a) daß zwischen den gegenüberliegenden Widerstandsbahnen (16) eine Keramikschicht (20) vorgesehen ist und
b) daß diese Widerstandsbahnen (16) über eine Metallschicht (29) mit der Keramikschicht (20) in thermisch leitender Verbindung stehen,
c) insbesondere, daß diese Metallschicht (29) eine Cr/Ni-Schicht ist.

## Claims

1. Reversible overcurrent limiter (3)
a) having at least one PTC thermistor (5, 5') in a first circuit branch, and
b) having at least one varistor (7) in a second circuit branch (6) electrically connected in parallel with the first circuit branch,
characterized
c) in that an ohmic resistor (14) is connected in the second circuit branch (6), in series connection with the at least one varistor (7), the ohmic resistor being rated such that an overcurrent is limited within 10 µs to a current value which is below the destruction limit of passive components.

2. Reversible overcurrent limiter (3)
a) having at least one PTC thermistor (5, 5') in a first circuit branch, and
b) having at least one varistor (7) in a second circuit branch (6) electrically connected in parallel with the first circuit branch,
characterized
c) in that a PTC thermistor (15) is connected in the second circuit branch (6), in series connection with the at least one varistor (7), the PTC thermistor being rated such that an overcurrent is limited within 10 µs to a current value which is below the destruction limit of passive components.

3. Reversible overcurrent limiter (3) according to claim 1 or 2, characterized in that the series connection in the second circuit branch (6) has an inductor (30).

4. Reversible overcurrent limiter (3) according to one of the preceding claims, characterized
a) in that the first circuit branch has at least two PTC thermistors (5, 5') connected in series,
b) of which at least one first PTC thermistor (5) has on heating resistance jumps to less than 100 times its cold resistance, and
c) of which at least one second PTC thermistor (5') has on heating resistance jumps to more than 100 times,
d) in particular to more than 10⁴ times its cold resistance.

5. Reversible overcurrent limiter (3) according to one of the preceding claims, characterized in that a diode (4) is connected in the reverse-bias direction of a short-circuit path in a third circuit branch which is connected in parallel with the first circuit branch.

6. Reversible overcurrent limiter (3) according to one of the preceding claims, characterized
a) in that a first main surface of the at least one PTC thermistor (5, 5') is in good thermally conductive contact, via an electrically insulating heat-transfer layer (21) having high thermal conductivity, with a first main surface of a ceramic layer (20),
b) in that a second main surface of the ceramic layer (20), on the opposite side from the first main surface, is in good thermally conductive contact with a cooling element (25), and
c) in that a second main surface of the resistive track (16), on the opposite side from the first main surface, is in pressure contact with a polymer film (22) of silicone elastomer or of another elastomer material.

7. Reversible overcurrent limiter according to Claim 6, characterized
a) in that the polymer film (22) has a thickness in the range of from 1.5 mm - 10 mm and,
b) has a Shore hardness in the range of from 10 Shore A - 100 Shore A.

8. Reversible overcurrent limiter (3) according to Claim 6 or 7, characterized in that the thermal-conduction layer (21) is a silicone-based heat-transfer compound and has a thickness in the range of from 10 µm - 100 µm.

9. Reversible overcurrent limiter according to one of Claims 6 to 8, characterized
a) in that the polymer film (22) is in pressure contact with a pressure compensation element (23),
b) in particular, in that the pressure compensation element (23) consists of a metal sheet forming a closed shell which is filled with a dielectric or electrically conductive fluid (24) which has a boiling temperature of above 150°C.

10. Reversible overcurrent limiter (3) according to one of the preceding claims, characterized
a) in that the at least one PTC thermistor (5, 5') has at least one resistive track (16), consisting of a PTC thermistor material,
b) which is embedded in a polymer matrix (27), and c) via the latter, is thermally conductively connected to at least one cooling element (25),
d) in that at least two mutually separated and at least approximately geometrically congruent resistive tracks (16) are embedded in the polymer matrix (27), in two planes which lie above one another, in such a way that the at least approximately geometrically congruent parts of the resistive tracks (16) are opposite each other, and
e) in that the resistive tracks (16) are connected together electrically in such a way that, in operation, a current flows through neighbouring resistive tracks (16) in an antiparallel direction,
f) in particular, in that the resistive track (16) is multiply subdivided by mutually parallel gaps (19).

11. Reversible overcurrent limiter according to Claim 10, characterized
a) in that a ceramic layer (20) is provided between the resistive tracks (16) which are opposite each other, and
b) in that these resistive tracks (16) are thermally conductively connected via a metal layer (29) to the ceramic layer (20),
c) in particular, in that this metal layer (29) is a Cr/Ni layer.

## Revendications

1. Limiteur de surintensité du courant réversible (3)
a) avec une thermistance (5, 5') au moins, dans une première branche de courant,
b) avec une varistance (7) au moins, dans une seconde branche de courant (6), branchée électriquement en parallèle avec la première branche de courant caractérisé
c) en ce que dans la seconde branche de courant (6), une résistance ohmique (14) est branchée en série avec une varistance (7) au moins, qui est dimensionnée de telle sorte que la surintensité de courant soit limitée dans un délai de 10 µs, à une valeur de courant située au-dessous de la limite de destruction des composants passifs.

2. Limiteur de surintensité du courant réversible (3)
a) avec une thermistance (5, 5') au moins dans une première branche de courant,
b) avec une varistance (7) au moins dans une seconde branche de courant (6), branchée en parallèle avec la première branche de courant,
caractérisé
c) en ce que dans la seconde branche de courant (6), une thermistance (15) est branchée en série avec une varistance (7) au moins, qui est dimensionnée de telle sorte que la surintensité de courant soit limitée dans un délai de 10 µs, à une valeur de courant située au-dessous de la limite de destruction des composants passifs.

3. Limiteur de surintensité du courant réversible (3) selon la revendication 1 ou 2 caractérisé en ce que le branchement en série dans la seconde branche de courant (6) présente une inductance (30).

4. Limiteur de surintensité du courant réversible (3) selon l'une des revendications précédentes, caractérisé
a) en ce que la première branche de courant présente deux thermistances (5, 5') au moins branchées en série,
b) dont une première thermistance (5) au moins présente lors de l'échauffement, des sauts de résistance de moins de 100 fois sa résistance à froid, et
c) dont une seconde thermistance (5') au moins présente lors de l'échauffement, des sauts de résistance de plus de 100 fois d) en particulier de plus de 10⁴ fois sa résistance à froid.

5. Limiteur de surintensité du courant réversible (3) selon l'une des revendications précédentes, caractérisé en ce que dans une troisième branche de courant branchée en parallèle avec la première branche de courant, une diode (4) est branchée dans le sens bloquant d'un chemin de court-circuit.

6. Limiteur de surintensité du courant réversible (3) selon l'une des revendications précédentes, caractérisé
a) en ce qu'une première surface principale d'une thermistance (5, 5') au moins, soit en liaison conduisant bien la chaleur par l'intermédiaire d'une couche conductrice de la chaleur (21), bonne conductrice de la chaleur, électriquement isolante, avec une première surface principale d'une couche de céramique (20),
b) en ce qu'une seconde surface principale de la couche de céramique (20) située en face de la première surface principale, soit en liaison conduisant bien la chaleur avec un élément de refroidissement (25),
c) en ce qu'une seconde surface principale de la piste de résistance (16) située en face de la première surface principale, est reliée par pression avec une feuille de polymère (22) d'élastomère de silicone ou d'un autre matériau élastomère.

7. Limiteur de surintensité du courant réversible (3) selon la revendication 6, caractérisé
a) en ce que la feuille de polymère (22) présente une épaisseur dans la plage de 1,5 mm - 10 mm et
b) une dureté Shore dans la plage de 10 Shore A - 100 Shore A.

8. Limiteur de surintensité du courant réversible (3) selon la revendication 6 ou 7, caractérisé en ce que la couche (21) conductrice de la chaleur est une pâte conductrice de la chaleur à base de silicone et qui présente une épaisseur dans la plage de 10 µm - 100 µm.

9. Limiteur de surintensité du courant réversible (3) selon les revendications 6 à 8, caractérisé
a) en ce que la feuille de polymère (22) est reliée par pression à un élément (23) de répartition de la pression et
b) en ce que surtout l'élément (23) de répartition de la pression est constitué d'une feuille métallique qui constitue une enveloppe fermée qui est remplie d'un fluide (24) diélectrique ou électriquement conducteur présentant une température d'ébullition supérieure à 150°C.

10. Limiteur de surintensité du courant réversible (3) selon l'une des revendications précédentes, caractérisé
a) en ce qu'une thermistance (5, 5') au moins présente une piste de résistance (16) dans un matériau conducteur du froid,
b) qui est noyé dans une matrice de polymère (27) et
c) qui se trouve à travers elle en liaison conductrice du point de vue thermique avec un élément de refroidissement (25) au moins,
d) en ce que deux pistes de résistance (16) au moins, se trouvant distantes l'une de l'autre et avec des surfaces de recouvrement géométriques au moins approchantes, dans deux plans superposés, sont noyées dans la matrice de polymère (27) de telle sorte que les pièces de surfaces de recouvrement géométriques au moins approchantes des pistes de résistance (16) se trouvent en vis à vis et
e) en ce que les pistes de résistance (16) sont reliées électriquement les unes aux autres de telle sorte que pendant le fonctionnement, des pistes de résistances (16) se trouvant en vis à vis sont traversées par un courant dans un sens antiparallèle,
f) en ce que surtout les pistes de résistance (16) sont subdivisées plusieurs fois par des évidements (19) mutuellement antiparallèles.

11. Limiteur de surintensité du courant réversible (3) selon la revendication 10, caractérisé
a) en ce qu'une couche de céramique (20) est prévue entre les pistes de résistance (16) en vis à vis et
b) en ce que ces pistes de résistance (16) sont en liaison conductrice du point de vue thermique avec la couche de céramique (20) par l'intermédiaire d'une couche métallique (29),
c) en ce que surtout cette couche métallique (29) est une couche de Ni/Cr.
